# EUROPEAN PATENT SPECIFICATION

(11) **EP 3 181 019 B1**
(45) Date of publication and mention of the grant of the patent: **06.03.2019**
(21) Application number: 15199788.9
(22) Date of filing: 14.12.2015
(51) Int. Cl.: H04L 29/08, A47J 27/00, H04L 12/28

(54) **A SYSTEM AND METHOD FOR PROCESSING AND PREPARING FOODS**
SYSTEM UND VERFAHREN ZUR VERARBEITUNG UND ZUBEREITUNG VON LEBENSMITTELN
SYSTÈME ET PROCÉDÉ DE TRAITEMENT ET DE PRÉPARATION D'ALIMENTS

(43) Date of publication of application: 21.06.2017
(73) Proprietor: Compania Espanola de Electromenaje, SA, 25790 Oliana (Lleida) (ES)
(72) Inventor: TRENCH ROCA, Lluís, 08650 Sallent (ES); ALET VIDAL, Josep, 25790 Oliana (ES)
(74) Representative: Juncosa Miró, Jaime

(56) References cited:
- EP-A2- 2 573 247
- DE-A1-102005 040 206

## Description

### Technical Field

The present invention relates, in general, to the field of the cooking appliances. In particular, present invention relates to a system, and to a method, for processing and preparing foods, preferably by cooking, in which a cooking apparatus is prepared to receive control instructions containing at least some preparation parameters (e.g. cooking recipes) for the foods to be processed and prepared from a remote computing device with telecommunication capability for instance via an intermediate server.

### Background of the Invention

From patent documents EP-A1-2822226, US-A1-2013003490, EP-B1-1561409, EP-A-2874031 and US-A1-2008178749, among other documents related with cooking apparatus, systems and methods are known for processing and preparing foods by means of receiving control instructions comprising preparations parameters from remote computing devices via an intermediate server such as a cloud computer server.

EP-A2-2573247 relates to a home appliance, to a home appliance system, and to a method for operating same, wherein the home appliance and a mobile terminal are connected to one another to add or update data in the home appliance through the mobile terminal connected thereto, diagnose the state of the home appliance by means of the mobile terminal, and supplement the function of the home appliance by means of the mobile terminal, thus expanding the functions of the home appliance to enable the easy control of the home appliance, and more conveniently controlling the home appliance.

None of the current documents found in the state of the art, however, teach or suggest the provision, in the cooking apparatus itself, of signaling means operative in case some control instructions are pending to be received by the cooking apparatus, for instance because the cooking apparatus wasn't switched on during the transmission of the control instructions from said intermediate server.

### Description of the invention

To that end, embodiments of the present invention provide in accordance with a first aspect a system for processing and preparing foods, said system comprising as commonly in the field, a cooking apparatus for food processing and preparation including:
- control means including a computer device for the control of power supply and operation of actuation means and energy transfer means of said cooking apparatus based on control instructions containing at least some preparation parameters for the foods to be processed and prepared,
- a screen for displaying at least said control instructions; and
- a communication interface providing interconnection of the cooking apparatus computer device with a communications network.

In addition, the system also comprises an intermediate server in connection with said communications network, prepared to receive control instructions for the cooking apparatus from a remote computing device with telecommunication capability.

Unlike the state-of-the-art systems, in the one proposed by the first aspect of the present invention the cooking apparatus further comprises signaling means (either visual or audible or combinations thereof) warning about the existence of some control instructions that have been sent to the cooking apparatus via said communications network and that are pending to be received by the cooking apparatus.

Preferably, at least part of the communications network is wireless (in general, by radio access). The communications network can be wireless either fully or only in part, including hardwired portions, for instance of optical fiber.

For one preferred embodiment, the intermediate server is a cloud-like computing infrastructure, or part thereof, and it is formed by one single computing entity or by a plurality of computing entities cooperating with one another.

The communications network is preferably a wide area network, although for other embodiments, the network is of a different type, such as a medium area network, or a combination of different types of networks.

In accordance with a preferred embodiment, said pending control instructions are at least temporally stored in said intermediate server in the event that the intermediate server has not been able to provide control instructions to the cooking apparatus computer device, for instance because the cooking apparatus was switch off or because a disturbance in the communications network occurred.

The signaling means can be automatically activated in response to a request from the intermediate server to the cooking apparatus computer device. Alternatively, the signaling means can be activated in response to a programed periodical request from the cooking apparatus computer device to the intermediate server.

In accordance with an embodiment, the signaling means operate using said screen, part of it or entirely, which preferably comprises a touch screen. Alternatively, the signaling means may comprise an indicator arranged on a casing of the cooking apparatus. In this latter case, advantageously, the signaling means can be autonomous from the operation of the cooking apparatus, i.e. the cooking apparatus does not need to be in operation or switched on for the warning be provided.

According to the invention, the screen is preferably arranged on the casing of the cooking apparatus, and it is controlled by the cooking apparatus computer device. In addition, the energy transferring means comprises heat transferring means for heating the foods to be processed and prepared.

In accordance with an embodiment, the system further includes a non-volatile memory of said cooking apparatus computer device in which said control instructions containing preparation parameters, received, are stored.

Embodiments of the present invention provide in accordance with a second aspect a method for assisting in the processing and preparation of foods by a cooking apparatus equipped with control means including at least one computer device for the control of power supply and operation of actuation means and energy transfer means of said cooking apparatus based on control instructions containing at least some preparation parameters for the foods to be processed and prepared, a screen for displaying at least said control instructions, and a communication interface providing interconnection of the cooking apparatus computer device with a communications network including at least an intermediate server prepared to receive control instructions for the cooking apparatus from a remote computing device with telecommunication capability.

Unlike the known state-of-the-art methods, the method proposed by the second aspect of the present invention comprises the emission of a warning, by signaling means of said cooking apparatus, alerting about some control instructions that have been sent to the cooking apparatus via said communications network and that are pending to be received by the cooking apparatus, after a connection between said intermediate server and said cooking apparatus computer device being established at the instance of either the intermediate server or the cooking apparatus computer device.

In general, the owner of the remote computing device accesses a service provided by the intermediate server, upon logging into it, for instance through a specific application ('App') installed in the remote computing device or through a web page, said record including the identification of the cooking apparatus belonging to him/her or whose control is granted to him/her. Once logged in, the user can directly send one or more control instructions to the intermediate server, for instance through said application or another specific application or through said web page or another web page, whether it be after automatically carrying out the identification/authentication -for instance, by running said application- or after a manual identification/authentication, by entering a username and password required by the intermediate server in a home page of said application or said web page.

In accordance with an embodiment the signaling means are automatically activated from a request from said intermediate server to said cooking apparatus computer device via said communication interface.

Alternatively, the signaling means are activated in response to a programed periodical request sent from the cooking apparatus computer device to said intermediate server.

The method proposed by the second aspect of the invention is adapted to be carried out using the system proposed by the first aspect of the invention, and vice versa (i.e., the system is adapted to implement the method). Let the embodiments described above in connection with the operation of the system proposed by the first aspect of the invention serve as descriptive embodiments of the possible actions or steps to be carried out through the method proposed by the second aspect of the invention.

### Brief description of the drawings

The above and other advantages and characteristics will be more fully understood from the following detailed description of embodiments with reference to the attached drawings, which must be taken by way of illustration, not limitation, wherein:

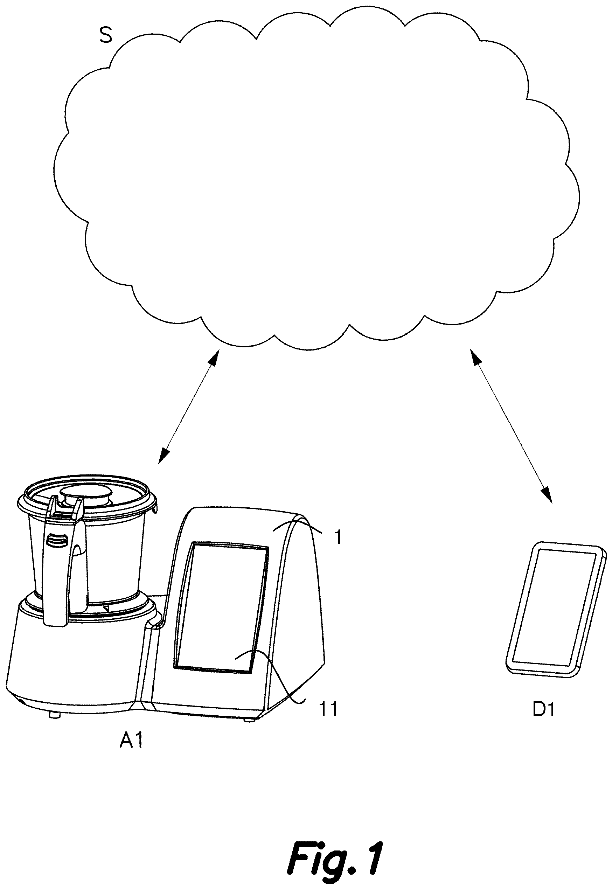

Fig. 1 schematically shows one embodiment of a system for processing and preparing foods in accordance with the teachings of the present invention. In this case, the system comprises a cooking apparatus, a user computing device and an intermediate server, formed and integrated in a cloud-like computing infrastructure of a communications network to which both the cooking apparatus and the user computing device are connected.

### Detailed description of some embodiments

As illustrated in Fig. 1, the system for processing and preparing foods proposed by the first aspect of the invention comprises:
- a cooking apparatus A1 for processing and preparing foods, preferably by cooking, comprising: control means including a computer device for the control of the power supply and the operation of actuation means and energy transfer means (preferably thermal) of the cooking appliance A1 based on control instructions containing at least some cooking parameters for the foods to be processed and prepared, a screen 11 for displaying the control instructions, and a communications interface providing interconnection of the cooking apparatus computer device with a communications network; and
- an intermediate server S in connection with the communications network, prepared to receive control instructions from a remote computing device with telecommunication capability D1 of a user (not shown) (such as a smartphone, a PDA, a tablet computer or a personal computer, among others) and to forward, either in an asynchronous or synchronous way, the received control instructions, to said cooking apparatus computer device.

According to the proposal of the present invention the cooking apparatus A1 further comprises signaling means (either audible and/or visual) warning about the existence of some control instructions that have been sent to the cooking apparatus A1 via said communications network and that are pending to be received by the cooking apparatus A1, for instance because the cooking apparatus A1 was switched off at the time the control instructions were transmitted or because some type of error occurred in the transmission, e.g. the intermediate server S had suffered some error in its performance or the communications network failed.

In addition, the pending control instructions can be temporally stored in the intermediate server S, for instance in a memory or database thereof, in the event the intermediate server S has not been able to provide the control instructions to the cooking apparatus A1.

According to an embodiment, the signaling means are automatically activated in response to a request from the intermediate server S to the cooking apparatus computer device. Alternatively, according to another embodiment, the signaling means are activated in response to a programed periodical request from the cooking apparatus computing device to the intermediate server S, e.g. every 30 minutes, 1 hour, 2 hours, or more.

In addition, according to a preferred embodiment of the present invention, the signaling means operate using said screen 11 (part of it or entirely) for instance via the presentation thereof of a warning message/communication. The screen 11 according to this preferred embodiment is the screen of said cooking apparatus computing device, a touch screen, and is arranged on a casing 1 of the cooking apparatus A1.

Alternatively, in accordance with another embodiment, the signaling means comprises an indicator, such as a LED or a speaker, arranged on said casing 1 of the cooking apparatus A1. So, the signaling means can be autonomous from the operation of the cooking apparatus A1.

The scope of the present invention is defined in the following attached claims.

## Claims

1. A system for processing and preparing foods, said system comprising:
- a cooking apparatus (A1) for processing and preparing foods including:
∘ control means including a computer device for the control of power supply and operation of actuation means and energy transfer means of said cooking apparatus (A1) based on control instructions containing at least some preparation parameters for the foods to be processed and prepared,
∘ a screen (11) for displaying at least said control instructions; and
∘ a communication interface providing interconnection of the cooking apparatus computer device with a communications network; and
- at least an intermediate server (S) in connection with said communications network, prepared to receive control instructions for the cooking apparatus (A1) from a remote computing device with telecommunication capability (D1),
the system being **characterized in that** the cooking apparatus (A1) further comprises signaling means configured to warn about the existence of some control instructions that have been sent to the cooking apparatus (A1) via said communications network and that are pending to be received by the cooking apparatus (A1), said signaling means being activated after a connection between said intermediate server (S) and said cooking apparatus computer device being established at the instance of either the intermediate server (S) or the cooking apparatus computer device.

2. The system according to claim 1, wherein the pending control instructions being at least temporally stored in said intermediate server (S) in the event that the intermediate server (S) having not been able to provide control instructions to the cooking apparatus computer device.

3. The system according to claim 2, wherein the signaling means are automatically activated in response to a request from said intermediate server (S) to the cooking apparatus computer device.

4. The system according to claim 2, wherein the signaling means are activated in response to a programed periodical request from the cooking apparatus computer device to the intermediate server (S).

5. The system according to claim 1, wherein the signaling means operate using at least a part of said screen (11).

6. The system according to claim 1, wherein the screen is arranged on a casing (1) of the cooking apparatus.

7. The system according to claim 1, wherein the signaling means comprises an indicator arranged on said casing (1) of the cooking apparatus (A1).

8. The system according to claim 1, wherein the signaling means includes a visual and/or audible signal emitter.

9. The system according to claim 1, wherein the screen (11) is controlled by the cooking apparatus computer device which is integrated or coupled in a front part of the casing (1) of the cooking apparatus (A1).

10. The system according to any one of the claims 1, 5, 6 or 9, wherein the screen (11) comprises at least a part which is a touch screen.

11. The system according to claim 1, wherein the energy transferring means comprises heat transferring means for heating the foods to be processed and prepared.

12. The system according to claim 1, further comprising a non-volatile memory of said cooking apparatus computer device in which said control instructions containing preparation parameters, received, are stored.

13. The system according to claim 1, wherein the signaling means are autonomous from the operation of the cooking apparatus (A1).

14. A method for assisting in the processing and preparation of foods by a cooking apparatus equipped with:
- control means including at least one computer device for the control of power supply and operation of actuation means and energy transfer means of said cooking apparatus based on control instructions containing at least some preparation parameters for the foods to be processed and prepared,
- a screen (11) for displaying at least said control instructions; and
- a communication interface providing interconnection of the cooking apparatus computer device with a communications network including at least an intermediate server (S) prepared to receive control instructions for the cooking apparatus (A1) from a remote computing device with telecommunication capability (D1),
the method being **characterized in that** it comprises emitting, by signaling means of said cooking apparatus (A1), a warning alerting about some control instructions that have been sent to the cooking apparatus (A1) via said communications network and that are pending to be received by the cooking apparatus (A1), after a connection between said intermediate server (S) and said cooking apparatus computer device being established at the instance of either the intermediate server (S) or the cooking apparatus computer device.

15. The method according to claim 14, wherein the signaling means are automatically activated from a request from said intermediate server (S) to said cooking apparatus computer device via said communication interface or activated in response to a programed periodical request sent from the cooking apparatus computer device to said intermediate server (S).

## Patentansprüche

1. System zur Verarbeitung und Zubereitung von Lebensmitteln, wobei das genannte System Folgendes umfasst:
- ein Kochgerät (A1) zur Verarbeitung und Zubereitung von Lebensmitteln beinhaltend:
∘ Steuermittel beinhaltend eine Computervorrichtung für die Steuerung der Stromversorgung und des Betriebs von Betätigungsmitteln und Energieübertragungsmitteln des genannten Kochgeräts (A1) basierend auf Steuerbefehlen, welche mindestens einige Zubereitungsparameter für die zu verarbeitenden und zuzubereitenden Lebensmittel enthalten,
∘ einen Bildschirm (11), zum Anzeigen mindestens der genannten Steuerbefehle; und
∘ eine Kommunikationsschnittstelle, welche die Zusammenschaltung der Computervorrichtung des Kochgeräts mit einem Kommunikationsnetzwerk bereitstellt; und
- mindestens einen Zwischenserver (S) in Verbindung mit dem genannten Kommunikationsnetzwerk, welcher dazu vorbereitet ist, Steuerbefehle für das Kochgerät (A1) aus einer Ferncomputervorrichtung mit Telekommunikationsfähigkeit (D1) zu empfangen,
wobei das System **dadurch gekennzeichnet ist, dass** das Kochgerät (A1) zusätzlich Signalisierungsmittel umfasst, welche dazu ausgebildet sind, auf das Vorhandensein von einigen Steuerbefehlen hinzuweisen, welche mittels des genannten Kommunikationsnetzwerks zum Kochgerät (A1) gesendet worden sind und deren Empfang vonseiten des Kochgeräts (A1) bevorsteht, wobei die genannten Signalisierungsmittel aktiviert werden, nachdem eine Verbindung zwischen dem genannten Zwischenserver (S) und der genannten Computervorrichtung des Kochgeräts auf Veranlassung von entweder dem Zwischenserver (S) oder der Computervorrichtung des Kochgeräts hergestellt worden ist.

2. System nach Anspruch 1, wobei die bevorstehenden Steuerbefehle mindestens zeitlich im genannten Zwischenserver (S) gespeichert werden, im Falle, dass der Zwischenserver (S) nicht in der Lage war, der Computervorrichtung des Kochgeräts Steuerbefehle bereitzustellen.

3. System nach Anspruch 2, wobei die Signalisierungsmittel als Reaktion auf eine Anforderung des genannten Zwischenservers (S) an die Computervorrichtung des Kochgeräts automatisch aktiviert werden.

4. System nach Anspruch 2, wobei die Signalisierungsmittel als Reaktion auf eine programmierte periodische Anforderung der Computervorrichtung des Kochgeräts an den Zwischenserver (S) aktiviert werden.

5. System nach Anspruch 1, wobei die Signalisierungsmittel unter Verwendung mindestens eines Teils des genannten Bildschirmes (11) betrieben werden.

6. System nach Anspruch 1, wobei der Bildschirm auf einem Gehäuse (1) des Kochgeräts angeordnet ist.

7. System nach Anspruch 1, wobei die Signalisierungsmittel einen Indikator umfasst, welcher auf dem genannten Gehäuse (1) des Kochgeräts (A1) angeordnet ist.

8. System nach Anspruch 1, wobei die Signalisierungsmittel einen Emitter von visuellen und/oder hörbaren Signalen beinhalten.

9. System nach Anspruch 1, wobei der Bildschirm (11) von der Computervorrichtung des Kochgeräts gesteuert wird, welche in einem Vorderteil des Gehäuses (1) des Kochgeräts (A1) integriert oder gekoppelt ist.

10. System nach einem der Ansprüche 1, 5, 6 oder 9, wobei der Bildschirm (11) mindestens einen Teil umfasst, welcher ein Berührungsbildschirm ist.

11. System nach Anspruch 1, wobei die Energieübertragungsmittel Wärmeübertragungsmittel zum Erwärmen der zu verarbeitenden und zuzubereitenden Lebensmittel umfassen.

12. System nach Anspruch 1, welches zusätzlich einen nicht flüchtigen Speicher der genannten Computervorrichtung des Kochgeräts umfasst, in welchem die genannten empfangenen, Zubereitungsparameter enthaltenden Steuerbefehle, gespeichert werden.

13. System nach Anspruch 1, wobei die Signalisierungsmittel unabhängig vom Betrieb des Kochgeräts (A1) sind.

14. Verfahren zum Unterstützen der Verarbeitung und Zubereitung von Lebensmitteln mittels eines Kochgeräts, welches mit Folgendem ausgerüstet ist:
- Steuermitteln beinhaltend mindestens eine Computervorrichtung für die Steuerung der Stromversorgung und des Betriebs von Betätigungsmitteln und Energieübertragungsmitteln des genannten Kochgeräts basierend auf Steuerbefehlen, welche mindestens einige Zubereitungsparameter für die zu verarbeitenden und zuzubereitenden Lebensmittel enthalten,
- einem Bildschirm (11) zum Anzeigen mindestens der genannten Steuerbefehle; und
- einer Kommunikationsschnittstelle, welche die Zusammenschaltung der Computervorrichtung des Kochgeräts mit einem Kommunikationsnetzwerk bereitstellt, beinhaltend mindestens einen Zwischenserver (S), welcher dazu vorbereitet ist, Steuerbefehle für das Kochgerät (A1) aus einer Ferncomputervorrichtung mit Telekommunikationsfähigkeit (D1) zu empfangen,
wobei das Verfahren **dadurch gekennzeichnet ist, dass** es das Senden, mittels Signalisierungsmittel des genannten Kochgeräts (A1), eines Warnhinweises umfasst, welcher vor einigen Steuerbefehlen warnt, welche dem Kochgerät (A1) mittels des genannten Kommunikationsnetzwerks gesendet worden sind und deren Empfang vonseiten des Kochgeräts (A1) bevorsteht, nachdem eine Verbindung zwischen dem genannten Zwischenserver (S) und der genannten Computervorrichtung des Kochgerät auf Veranlassung von entweder dem Zwischenserver (S) oder der Computervorrichtung des Kochgeräts hergestellt worden ist.

15. Verfahren nach Anspruch 14, wobei die Signalisierungsmittel durch eine Anforderung des genannten Zwischenservers (S) an die genannte Computervorrichtung des Kochgeräts mittels der genannten Kommunikationsschnittstelle automatisch aktiviert werden oder als Reaktion auf eine programmierte periodische Anforderung aktiviert werden, welche von der Computervorrichtung des Kochgeräts dem genannten Zwischenserver (S) gesendet wird.

## Revendications

1. Un système pour le traitement et la préparation d'aliments, ce système comportant :
- Un appareil de cuisson (A1) pour le traitement et la préparation d'aliments comprenant :
∘ des moyens de contrôle comprenant un dispositif informatique pour le contrôle de l'alimentation en énergie et du fonctionnement de moyens d'actionnement et des moyens de transfert d'énergie de cet appareil de cuisson (A1) basé sur des instructions de contrôle contenant au moins quelques paramètres de préparation des aliments à traiter et à préparer,
∘ un écran (11) pour afficher au moins ces instructions de contrôle ; et
∘ une interface de communication fournissant l'interconnexion du dispositif informatique de l'appareil de cuisson avec un réseau de communication ; et
- au moins un serveur intermédiaire (S) relié à ce réseau de communications, préparé pour recevoir des instructions de contrôle pour l'appareil de cuisson (A1) d'un dispositif informatique à distance ayant une capacité de télécommunication (D1),
le système étant **caractérisé en ce que** l'appareil de cuisson (A1) comporte en plus des moyens de signalisation configurés pour avertir de l'existence de certaines instructions de contrôle, lesquelles ont été envoyées à l'appareil de cuisson (A1) par le biais de ce réseau de communications et qui sont à l'attente d'être reçues par l'appareil de cuisson (A1), ce moyen de signalisation étant activé après une connexion entre ce serveur intermédiaire (S) et ce dispositif informatique de l'appareil de cuisson établie à la distance soit du serveur intermédiaire (S) soit du dispositif informatique de l'appareil de cuisson .

2. Le système conformément à la revendication 1, dans lequel les instructions de contrôles en attente sont au moins temporairement stockées dans ce serveur intermédiaire (S) dans le cas où le serveur intermédiaire (S) n'aurait pas été capable de fournir les instructions de contrôle au dispositif informatique de l'appareil de cuisson.

3. Le système conformément à la revendication 2, dans lequel les moyens de signalisation sont automatiquement activés en réponse à une demande de ce serveur intermédiaire (S) au dispositif informatique de l'appareil de cuisson.

4. Le système conformément à la revendication 2, dans lequel les moyens de signalisation sont activés en réponse à une demande périodique programmée du dispositif informatique de l'appareil de cuisson au serveur intermédiaire (S).

5. Le système conformément à la revendication 1, dans lequel les moyens de signalisation fonctionnent en utilisant au moins une partie de cet écran (11).

6. Le système conformément à la revendication 1, dans lequel l'écran est aménagé dans un boîtier (1) de l'appareil de cuisson.

7. Le système conformément à la revendication 1, dans lequel les moyens de signalisation comportent un indicateur aménagé dans ce boîtier (1) de l'appareil de cuisson (A1).

8. Le système conformément à la revendication 1, dans lequel les moyens de signalisation comprennent un émetteur de signaux visuel et/ou sonore.

9. Le système conformément à la revendication 1, dans lequel l'écran (11) est contrôlé par le dispositif informatique de l'appareil de cuisson qui est intégré ou couplé sur une partie avant du boîtier (1) de l'appareil de cuisson (A1).

10. Le système conformément à une quelconque des revendications 1, 5, 6 ou 9, dans lequel l'écran (11) comporte au moins une partie qui est un écran tactile.

11. Le système conformément à la revendication 1, dans lequel les moyens de transfert d'énergie comportent des moyens de transfert de chaleur pour chauffer les aliments à traiter et à préparer.

12. Le système conformément à la revendication 1, comportant en plus une mémoire non volatile de ce dispositif informatique de l'appareil de cuisson dans laquelle ces instructions de contrôle reçues, contenant des paramètres de préparation, sont stockées.

13. Le système conformément à la revendication 1, dans lequel les moyens de signalisation sont autonomes du fonctionnement de l'appareil de cuisson (A1).

14. Une méthode pour aider au traitement et préparation d'aliments par un appareil de cuisson équipé de :
- moyens de contrôle comprenant au moins un dispositif informatique pour le contrôle de l'alimentation en énergie et du fonctionnement des moyens d'actionnement et des moyens de transfert d'énergie de cet appareil de cuisson basé sur des instructions de contrôle contenant au moins quelques paramètres de préparation des aliments à traiter et à préparer,
- un écran (11) pour afficher au moins ces instructions de contrôle ; et
- une interface de communication fournissant l'interconnexion du dispositif informatique de l'appareil de cuisson avec un réseau de communications comportant au moins un serveur intermédiaire (S) préparé pour recevoir des instructions de contrôle pour l'appareil de cuisson (A1) d'un dispositif informatique à distance ayant une capacité de télécommunication (D1),
la méthode étant **caractérisée en ce qu'**elle comprend l'émission, par des moyens de signalisations de cet appareil de cuisson (A1), d'un avertissement alertant de certaines instructions de contrôle qui ont été envoyées à l'appareil de cuisson (A1) par le bais de ce réseau de communications et qui sont à l'attente d'être reçues par l'appareil de cuisson (A1), après qu'une connexion entre ce serveur intermédiaire (S) et ce dispositif informatique de l'appareil de cuisson ait été établie à la demande soit du serveur intermédiaire (S) soit du dispositif informatique de l'appareil de cuisson.

15. La méthode conformément à la revendication 14, dans laquelle les moyens de signalisation sont automatiquement activés à la demande de ce serveur intermédiaire (S) à ce dispositif informatique de l'appareil de cuisson par le biais de cette interface de communication ou activés en réponse à une demande périodique programmée envoyée par le dispositif informatique de l'appareil de cuisson à ce serveur intermédiaire (S).
